# EUROPÄISCHE PATENTANMELDUNG

(11) **EP 3 974 146 A1**
(43) Veröffentlichungstag der Anmeldung: **30.03.2022**
(21) Anmeldenummer: 21198272.3
(22) Anmeldetag: 22.09.2021
(51) Int. Cl.: B29C 37/00, B29C 48/05, B29C 70/02, B29C 45/00, B29C 70/06, B29C 70/62, B29C 70/14, C22C 47/02, B29C 45/14, B29C 70/74

(54) **VERFAHREN UND VORRICHTUNG ZUM HERSTELLEN EINES OBJEKTS MIT EINER BASIS UND WENIGSTENS EINER HOHLRAUMFÜLLUNG UND OBJEKT MIT EINER BASIS UND WENIGSTENS EINER HOHLRAUMFÜLLUNG**

(30) Priorität: 25.09.2020 DE 102020125149
(71) Anmelder: Universität Stuttgart, 70174 Stuttgart (DE)
(72) Erfinder: SCHLOTTHAUER, Tristan, 70569 Stuttgart (DE)
(74) Vertreter: Ege Lee & Roider Patentanwälte

(57) **Zusammenfassung**

Verfahren zum Herstellen eines Objekts, das Objekt aufweisend eine Basis mit wenigstens einem röhrenförmigen Hohlraum und wenigstens eine Hohlraumfüllung aus einem Verbundwerkstoff mit wenigstens einem Füllstoff und Matrixmaterial (304), wobei zeitlich aufeinanderfolgend der wenigstens eine Füllstoff in dem zu verarbeitenden Matrixmaterial (304) suspendiert, das Füllstoff-Matrixmaterial-Gemisch (302) in den wenigstens einen Hohlraum eingebracht und das Matrixmaterial verfestigt wird und wobei eine Lage und/oder eine Form des wenigstens einen Hohlraums unter Berücksichtigung strömungsmechanischer Aspekte bestimmt werden/wird, um Füllstoff und/oder Füllstoffelemente (300) beim Einbringen des Füllstoff-Matrixmaterial-Gemischs (302) lokal gezielt auszurichten oder zu orientieren, Vorrichtung zum Herstellen eines derartigen Objekts und danach/damit hergestelltes Objekt.

## Beschreibung

Die Erfindung betrifft ein Verfahren zum Herstellen eines Objekts, das Objekt aufweisend eine Basis mit wenigstens einem röhrenförmigen Hohlraum und wenigstens eine Hohlraumfüllung aus einem Verbundwerkstoff mit wenigstens einem Füllstoff und Matrixmaterial. Außerdem betrifft die Erfindung eine Vorrichtung zum Herstellen eines Objekts, das Objekt aufweisend eine Basis mit wenigstens einem röhrenförmigen Hohlraum und wenigstens eine Hohlraumfüllung aus einem Verbundwerkstoff mit wenigstens einem Füllstoff und Matrixmaterial. Außerdem betrifft die Erfindung ein Objekt, aufweisend eine Basis mit wenigstens einem röhrenförmigen Hohlraum und wenigstens eine Hohlraumfüllung aus einem Verbundwerkstoff mit wenigstens einem Füllstoff und Matrixmaterial.

Das Dokument WO 2016/092132 A1 betrifft ein Verfahren zur Herstellung eines Teils aus Verbundwerkstoff, das einen Körper und in seinem Inneren ein oder mehrere Endlosfaserbündel aufweist. Dem Dokument WO 2016/092132 A1 zufolge wird ein Körper erhalten, der in seinem Inneren einen oder mehrere röhrenförmige Hohlräume aufweist. Die Hohlräume erstrecken sich jeweils zwischen einem ersten Ende, das an der Außenfläche des Körpers angeordnet ist und eine Einlassöffnung aufweist, und einem zweiten Ende, das dem ersten Ende gegenüberliegt. In das Innere mindestens eines röhrenförmigen Hohlraums werden durch dessen Einlassöffnung Harz in flüssigem Zustand und ein Endlosfaserbündel eingeführt. Das Harz wird bis zu seiner Verfestigung ausgehärtet, wobei es am Körper anhaftet und das Endlosfaserbündel fixiert. Außerdem betrifft das Dokument WO 2016/092132 A1 ein System zur Herstellung eines Teils aus Verbundwerkstoff und das erhaltene Teil aus Verbundwerkstoff.

Das Dokument US 2003/0186042 A1 betrifft ein Verfahren zur Herstellung von Prototypenteilen unter Verwendung von Stereolithographie, selektivem Lasersintern (SLS) oder Gussverfahren und zur Veränderung oder Verbesserung der Eigenschaften dieser Prototypenteile. In dem Dokument US 2003/0186042 A1 wird vorgeschlagen, ein Bauteil in einem Rapid-Prototyping-Verfahren herzustellen, in dem Rapid-Prototyping-Bauteil Hohlräume zu erzeugen und die Hohlräume mit einem Füllmaterial zu füllen, um das Rapid-Prototyping-Bauteil haltbarer, flexibler, steifer, stärker, temperaturbeständiger, elastischer zu machen. Dem Dokument US 2003/0186042 A1 zufolge können die Hohlräume in einer Vielzahl von Formen erzeugt werden, einschließlich kugelförmiger Hohlräume, zellularer Hohlräume (z.B. Wabenhohlräume), Tunnel oder Kanälen mit kreisförmigem Querschnitt. Die Hohlräume, Tunnel und Kanäle können voneinander getrennt oder miteinander verbunden sein. Das Füllmaterial wird in die Hohlräume gegossen, gespritzt, vakuumiert, extrudiert, abgelagert oder auf andere Weise eingebracht. Das Füllmaterial ist dem Dokument D1 zufolge nicht spröde, flexibel oder Füllstoffe starr sein und beispielsweise Polyester, Polystyrol, Styrol, Talk, Kalzium, Glasfaser, Titandioxid, Methacrylatmonomer, Urethane, Klebstoffe, Silikone, Peroxidhärter, Gummiharze, Polyether, Acrylate, Nylons, Polyethylen, Acetel, Epoxide, Teflon, Keramik, MC-Carbide, Styrolmonomere, Cyandacrylat, Aceton und Methylethylketon umfassen. Konkret werden in dem Dokument US 2003/0186042 A1 eine Mischung aus Polyesterharz und Styrolmonomeren, mit Zusatz von Talkum und Glasfaserfilamenten und einem Peroxid-Härter-Katalysator bzw. ein Gemisch aus Polyesterharz und Styrolmonomeren, dem Talkum und Glasfaserfilamente zugesetzt sind, ohne Härterkatalysator beschrieben.

Das Dokument DE 696 10 028 T2 betrifft ein Verfahren zum Herstellen eines festen, dimensionsmäßig stabilen Gegenstands mit einer dreidimensionalen, schnell formfrei hergestellten Struktur mit einem hohlen Hohlraum und schlägt vor, ein Verfestigungsmaterial in den Hohlraum zu injizieren, wobei das Verfestigungsmaterial eine Viskosität von zwischen etwa 1 bis 30 Pa s hat, und das Verfestigungsmaterial zu härten. Dem Dokument DE 696 10 028 T2 zufolge wird das Verfestigungsmaterial in einem Fließprozess eingebracht, besteht beispielsweise aus Keramikmaterialien, Epoxymaterialien, Urethanen oder andere Materialien und kann zusätzliche Teilchen aus anderem Material beinhalten, einschließlich Metallteilchen, Faserteilchen oder Keramikteilchen, aber auch andere.

Das Dokument EP 3 231 592 A1 betrifft ein Verfahren zur Herstellung eines Bauteils aus Verbundmaterial, das einen Körper und ein oder mehrere Endlosfaserbündel in seinem Inneren aufweist. In dem Dokument EP 3 231 592 A1 wird vorgeschlagen, einen Körper herzustellen, der in seinem Inneren einen oder mehrere röhrenförmige Hohlräume mit einer Eintrittsöffnung aufweist, Harz in flüssigem Zustand und ein Endlosfaserbündel in das Innere mindestens eines röhrenförmigen Hohlraums durch dessen Eintrittsöffnung einzuführen und das Harz bis zu seiner Verfestigung auszuhärten, wobei es am Körper haftet und das Endlosfaserbündel fixiert.

Der Erfindung liegt die Aufgabe zugrunde, ein eingangs genanntes Verfahren zu verbessern. Außerdem liegt der Erfindung die Aufgabe zugrunde, eine eingangs genannte Vorrichtung strukturell und/oder funktionell zu verbessern. Außerdem liegt der Erfindung die Aufgabe zugrunde, ein eingangs genanntes Objekt strukturell und/oder funktionell zu verbessern.

Die Aufgabe wird gelöst mit einem Verfahren mit den Merkmalen des Anspruchs 1. Außerdem wird die Aufgabe gelöst mit einer Vorrichtung mit den Merkmalen des Anspruchs 10. Außerdem wird die Aufgabe gelöst mit einem Objekt mit den Merkmalen des Anspruchs 12. Vorteilhafte Ausführungen und/oder Weiterbildungen sind Gegenstand der abhängigen Ansprüche.

Das Verfahren kann unterschiedliche Fertigungsverfahren kombinieren. Das Verfahren kann ein 3D-Druck-Verfahren und ein Spritzgießverfahren kombinieren. Das Verfahren kann ein 3D-Druck-Spritzgieß-Verfahren sein. Wenigstens ein Verfahrensschritt kann simuliert und/oder analysiert werden.

Die Basis kann in einem 3D-Druck-Verfahren, auch als generatives oder additives Verfahren bezeichnet, in einem kombinierten Verfahren oder in einem Hybridverfahren hergestellt werden. Die Basis kann mithilfe von Stereolithografie (SL), Laser-Sintern (LS), Laser-Strahlschmelzen (Laser Beam Melting = LBM), Elektronen-Strahlschmelzen (Electron Beam Melting = EBM), Multi-Jet Modelling (MJM), Poly-Jet Modelling (PJM), 3-D-Drucken (3DP, auch Binder Jetting), Layer Laminated Manufacturing (LLM), Digital Light Processing (DLP), Thermotransfer-Sintern (TTS) hergestellt werden. Die Basis kann einteilig hergestellt werden. Die Basis kann mehrteilig hergestellt werden, wobei zunächst einzelne Teile der Basis hergestellt und diese nachfolgend miteinander verbunden werden, insbesondere stoffschlüssig, beispielsweise durch Kleben. Die Basis kann aus Kunststoff, Kunstharze, Keramik, Metall und/oder Naturstoff hergestellt werden.

Der wenigstens eine Hohlraum kann beim Herstellen der Basis hergestellt werden. Der wenigstens eine Hohlraum kann zumindest eine Öffnung aufweisen. Der wenigstens eine Hohlraum kann eine Kavität bilden. Der wenigstens eine Hohlraum kann eine erste Öffnung und wenigsten eine weitere Öffnung aufweisen. Der wenigstens eine Hohlraum kann kanalförmig sein. Der wenigstens eine Hohlraum kann ohne innenliegende Stützstruktur ausgeführt sein. Der wenigstens eine Hohlraum kann einfach, mehrfach und/oder kreuzförmig verzweigt sein. Der wenigstens eine Hohlraum kann einfach oder mehrfach räumlich gekrümmt sein. Der wenigstens eine Hohlraum kann variierende Durchmesser und/oder Querschnitte aufweisen. Der wenigstens eine Hohlraum kann eine Längsachse aufweisen. Der wenigstens eine Hohlraum kann eine sich entlang der Längsachse erstreckende Länge aufweisen. Die Durchmesser und/oder Querschnitte des wenigstens einen Hohlraums können rechtwinklig zur Längsachse angeordnet sein. Die Durchmesser und/oder Querschnitte des wenigstens einen Hohlraums können entlang der Längsachse variieren.

Die wenigstens eine Hohlraumfüllung kann mithilfe des Füllstoff-Matrixmaterial-Gemischs gebildet werden. "Zeitlich aufeinanderfolgend" bedeutet, dass die jeweiligen Verfahrensschritte in der angegebenen Reihenfolge durchgeführt werden. Vor, zwischen und/oder nach den zeitlich aufeinanderfolgend ausgeführten Verfahrensschritten können weitere Verfahrensschritte ausgeführt werden.

Das Matrixmaterial kann einen Ausgangszustand, einen zu verarbeitenden Zustand und/oder einen verfestigten Zustand aufweisen. In dem Ausgangszustand kann das Matrixmaterial als Formmasse und/oder in Form gesonderter Vorprodukte vorliegen. Die Formmasse kann als Schüttgut mit Feststoffeigenschaften, insbesondere als Granulat oder Pulver, oder als Flüssigkeit, insbesondere als Dispersion oder Lösung, vorliegen.

In dem zu verarbeitenden Zustand kann das Matrixmaterial flüssig oder viskos sein. Vor dem Suspendieren des wenigstens einen Füllstoffs in dem zu verarbeitenden Matrixmaterial kann das Matrixmaterial ausgehend von dem Ausgangszustand in den zu verarbeitenden Zustand überführt werden. Das Matrixmaterial kann unter Wärmezufuhr und/oder durch Mischen von dem Ausgangszustand in den zu verarbeitenden Zustand überführt werden.

Es kann ein Matrixmaterial ausgewählt werden, das mit der Basis stoffschlüssig verbindbar ist. Wenn die Basis in einem 3D-Druck-Verfahren hergestellt wird, kann eine Rest-Reaktivität eines 3D-Druck-Werkstoffs bis zum Einbringen des Füllstoff-Matrixmaterial-Gemischs vorgehalten werden, um einen Stoffschluss zu verbessern. Beispielsweise kann dafür bei einer Herstellung der Basis eine Belichtungszeit reduziert werden, um den 3D-Druck-Werkstoff nicht vollständig zu vernetzen. Eine vollständige Vernetzung kann dann nachfolgend zusammen mit einem Verfestigen des Matrixmaterials erfolgen.

Das Matrixmaterial kann ein Kunststoff sein. Das Matrixmaterial kann thermoplastisch sein. Das Matrixmaterial kann Polyetheretherketon (PEEK), Polyphenylensulfid (PPS), Polysulfon (PSU), Polyetherimid (PEI), Polytetrafluorethen (PTFE), Polylactid (PLA), Polypropylen (PP), Polyethylen (PE) und/oder Polyamid (PA) aufweisen. Das Matrixmaterial kann duroplastisch sein. Das Matrixmaterial kann Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR) und/oder Aminoharze, wie Melaminharz (MF/MP) oder Harnstoffharz (UF), aufweisen.

Der wenigstens eine Füllstoff und das zu verarbeitende Matrixmaterial können miteinander gemischt werden. Der wenigstens eine Füllstoff und das zu verarbeitende Matrixmaterial können ein heterogenes Stoffgemisch bilden. Der wenigstens eine Füllstoff und das zu verarbeitende Matrixmaterial können ein heterogenes Stoffgemisch bilden. Der wenigstens eine Füllstoff kann in dem zu verarbeitenden Matrixmaterial suspendiert werden, um das Füllstoff-Matrixmaterial-Gemisch zu bilden.

Das Matrixmaterial kann von dem zu verarbeitenden Zustand in den verfestigen Zustand überführt werden. Das Matrixmaterial kann thermisch und/oder reaktiv, beispielsweise durch Abkühlen, Erwärmen oder mithilfe von UV-Strahlung, von dem zu verarbeitenden Zustand in den verfestigen Zustand überführt werden. Die UV-Strahlung kann mithilfe von Lichtwellenleiten, wie Glasfasern, eingebracht werden, insbesondere auch bis tief in den wenigstens einen Hohlraum hinein. Das Matrixmaterial kann bereits während dem Einbringen und/oder danach von dem zu verarbeitenden Zustand in den verfestigen Zustand überführt werden. In dem verfestigen Zustand des Matrixmaterials kann das Füllstoff-Matrixmaterial-Gemisch als Füllstoff-Matrix-Verbund die Hohlraumfüllung bilden.

Eine Lage und/oder eine Form des wenigstens einen Hohlraums werden/wird unter Berücksichtigung strömungsmechanischer Aspekte bestimmt. Die strömungsmechanischen Aspekte können ein physikalisches Verhalten des Füllstoff-Matrixmaterial-Gemischs und/oder Strömungsvorgänge des Füllstoff-Matrixmaterial-Gemischs beim Einbringen des Füllstoff-Matrixmaterial-Gemischs in den wenigstens einen Hohlraum betreffen. Die strömungsmechanischen Aspekte können einen Volumenfluss und/oder ein Geschwindigkeitsprofil des Füllstoff-Matrixmaterial-Gemischs und/oder eine Reibung zwischen dem Füllstoff-Matrixmaterial-Gemisch und einer Oberfläche des wenigstens einen Hohlraums umfassen.

Eine Lage und/oder eine Form des wenigstens einen Hohlraums kann zusätzlich oder alternativ unter Berücksichtigung einer Lastpfadanalyse der herzustellenden Objekts bestimmt werden. Die Lastpfadanalyse kann auch als Topologieoptimierung bezeichnet werden. Der wenigstens eine Hohlraum kann durch Subtraktion relevanter Lastpfade in das Objekt eingebracht werden. Der wenigstens eine Hohlraum kann durch Aufdicken relevanter Lastpfade erzeugt werden.

Der wenigstens eine Hohlraum kann vor einem Einbringen des Füllstoff-Matrixmaterial-Gemischs gereinigt werden. Beispielsweise kann der wenigstens eine Hohlraum unter Druck ausgewaschen werden, z.B. mit Isopropanol. Eine Oberfläche des wenigstens einen Hohlraums kann zumindest abschnittsweise modifiziert, insbesondere geglättet, aufgerauht oder profiliert, oder entfernt werden. In den wenigstens einen Hohlraum kann vor einem Einbringen des Füllstoff-Matrixmaterial-Gemischs wenigstens ein Element zur Strömungsbeeinflussung, insbesondere eine Widerstandselement oder eine Leitelement, eingebracht werden. In den wenigstens einen Hohlraum kann vor einem Einbringen des Füllstoff-Matrixmaterial-Gemischs wenigstens ein elektrisches oder elektronisches Bauelement, wie Sensor oder Aktuator, eingebracht werden.

Belastungen des Objekts können simuliert und/oder analysiert werden. Lastpfade können simuliert und/oder analysiert werden. Eine Lage und/oder eine Form des wenigstens einen Hohlraums kann simuliert und/oder analysiert werden. Eine Oberflächenmodifikation des wenigstens einen Hohlraums kann simuliert und/oder analysiert werden. Wenigstens ein Element zur Strömungsbeeinflussung in dem wenigstens einen Hohlraum kann simuliert und/oder analysiert werden. Das Einbringen des Füllstoff-Matrixmaterial-Gemischs kann simuliert und/oder analysiert werden. Unterschiedliche Füllstoff-Matrixmaterial-Gemische können simuliert und/oder analysiert werden. Strömungsvorgänge können simuliert und/oder analysiert werden.

Der wenigstens eine Füllstoff, das Matrixmaterial und/oder ein Füllgrad des Füllstoff-Matrixmaterial-Gemischs können/kann unter Berücksichtigung strömungsmechanischer Aspekte ausgewählt oder bestimmt werden. Zusätzlich oder alternativ können/kann der wenigstens eine Füllstoff, das Matrixmaterial und/oder ein Füllgrad des Füllstoff-Matrixmaterial-Gemischs unter Berücksichtigung einer Lastanalyse der herzustellenden Objekts ausgewählt oder bestimmt werden. Ein Füllgrad des Füllstoff-Matrixmaterial-Gemischs kann ca. 10 Gew.-% bis ca. 60 Gew.-% betragen.

Das Füllstoff-Matrixmaterial-Gemisch kann vor dem Einbringen entgast werden. Aus dem Füllstoff-Matrixmaterial-Gemisch können/kann vordem Einbringen Luft und/oder Ausgasungen entfernt werden. Das Füllstoff-Matrixmaterial-Gemisch kann vor dem Einbringen homogenisiert werden.

Das Füllstoff-Matrixmaterial-Gemisch kann unter Differenzdruckwirkung eingebracht werden. Das Füllstoff-Matrixmaterial-Gemisch kann unter Unterdruckwirkung und/oder Überdruckwirkung eingebracht werden. Der wenigstens eine Hohlraum kann vor dem Einbringen des Füllstoff-Matrixmaterial-Gemischs evakuiert werden. Das Füllstoff-Matrixmaterial-Gemisch kann während und/oder nach dem Einbringen druckbeaufschlagt werden.

Der wenigstens eine Füllstoff kann Füllstoffelemente aufweisen. Der wenigstens eine Füllstoff kann eine Vielzahl von Füllstoffelementen aufweisen. Die Füllstoffelemente können anisotrope Eigenschaften aufweisen. Die Füllstoffelemente können anisotrope mechanische Eigenschaften aufweisen. Die Füllstoffelemente können eine anisotrope Elastizität aufweisen. Die Füllstoffelemente können ein anisotropes Elastizitätsgesetz aufweisen. Die Füllstoffelemente können eine anisotrope Festigkeit, insbesondere Zugfestigkeit, aufweisen. Die Füllstoffelemente können ein anisotropes Fließverhalten und/oder Schwimmverhalten aufweisen. Die Füllstoffelemente können einen zumindest annähernd runden Querschnitt aufweisen. Die Füllstoffelemente können eine bezogen auf ihren Querschnitt größere Länge aufweisen. Die Füllstoffelemente können Fasern, Granulat und/oder Pulver sein. Die Füllstoffelemente können Kurzfasern und/oder Langfasern sein. Als wenigstens einer Füllstoff können/kann Fasern, Granulat und/oder Pulver verwendet werden. Als wenigstens einer Füllstoff Kurzfasern und/oder Langfasern verwendet werden. Die Fasern können eine durchschnittliche Länge aufweisen, die kürzer als eine Länge des wenigstens einen Hohlraums ist. Die Fasern können eine durchschnittliche Länge aufweisen, die wesentlich kürzer als eine Länge des wenigstens einen Hohlraums ist. Die Fasern können eine durchschnittliche Länge aufweisen, die kürzer als 1/10, insbesondere kürzer als 1/100, insbesondere kürzer als 1/1.000, insbesondere kürzer als 1/1×10³, insbesondere kürzer als 1/1×10⁶, insbesondere kürzer als 1/1×10⁹, insbesondere kürzer als 1/1×10¹², einer Länge des wenigstens einen Hohlraums ist. Die Fasern können eine durchschnittliche Länge von ca. 20µm bis ca. 2000µm, insbesondere von ca. 40µm bis ca. 300µm, aufweisen. Die Fasern können unspezifisch, voneinander gesondert und/oder diskontinuierlich angeordnet sein. Die Fasern können als Verstärkungsfasern dienen. Die Fasern können abgegrenzt sein von als Rovings oder Gewebe angeordneten Endlosfasern. Die Fasern können organische Fasern, wie Aramidfasern, Kohlenstofffasern, Polyester-Fasern, NylonFasern, Polyethylen-Fasern, Plexiglas-Fasern, anorganische Fasern, wie Basaltfasern, Borfasern, Glasfasern, Keramikfasern, Kieselsäurefasern, oder eine Mischung davon sein. Die Fasern können nach einem Verfestigen des Matrixmaterials einen Faser-Matrix-Verbund bilden.

Die Fasern können eine auf das Matrixmaterial angepasste Schlichte und/oder Oberflächenmodifikation (z.B. Oxidation) aufweisen. Damit können die mechanischen Eigenschaften verbessert werden, insbesondere kann eine Zugfestigkeit erhöht werden.

Der wenigstens eine Füllstoff kann elektrisch leitend oder elektrisch halbleitend sein. Damit können elektrische Bauelemente ausgelesen und/oder mit elektrischer Energie versorgt werden. Eine Kontaktierung kann auch mithilfe von Kohlenstofffasern ermöglicht werden, sofern durch einen Fasergehalt eine hohe Packdichte erreicht wird. Somit kann eine lasttragende und gleichzeitig leitfähige Struktur erzeugt werden, welche hervorragend zur Funktionsintegration geeignet ist.

Der wenigstens eine Füllstoff kann feuerbeständig und/oder temperaturbeständig sein. Das Pulver kann keramisch und/oder sinterbar sein. Es können mehrere unterschiedliche Füllstoffe kombiniert werden. Mehrere Hohlräume können mit unterschiedlichen Füllstoff-Matrixmaterial-Gemischen gefüllt werden.

Der Füllstoff und/oder die Füllstoffelemente wird/werden beim Einbringen des Füllstoff-Matrixmaterial-Gemischs lokal gezielt ausgerichtet oder orientiert. Der Füllstoff und/oder die Füllstoffelemente können durch Kontrollieren eines Volumenfluss und/oder eines Geschwindigkeitsprofils des Füllstoff-Matrixmaterial-Gemischs und/oder durch eine Reibung zwischen dem Füllstoff-Matrixmaterial-Gemisch und einer Oberfläche des wenigstens einen Hohlraums gezielt ausgerichtet und/oder orientiert werden.

Nach einem Verfestigen des Matrixmaterials kann das Objekt weiterbearbeitet und/oder veredelt werden. Beispielsweise kann das Objekt zumindest abschnittsweise beschichtet werden. Das Objekt kann mit einer Metallschicht überzogen werden, beispielsweise kann das Objekt galvanisiert werden. Damit können insbesondere Verbundeigenschaften weiter verbessert werden.

Die Vorrichtung kann eine stationäre, teilstationäre oder mobile Vorrichtung sein. Die Vorrichtung kann automatisiert, teilautomatisiert oder manuell betätigbar sein. Die Vorrichtung kann einen Aufnahmeraum für das Füllstoff-Matrixmaterial-Gemisch aufweisen. Der Aufnahmeraum kann mit dem wenigstens einen Hohlraum kommunizierend verbindbar sein. Die Vorrichtung kann ein Sperrmodul aufweisen. Das Sperrmodul kann zum Kontrollieren einer Füllstoff-Matrixmaterial-Gemisch-Strömung dienen. Das Sperrmodul kann zum Kontrollieren einer Füllstoff-Matrixmaterial-Gemisch-Strömung von dem Aufnahmeraum in den wenigstens einen Hohlraum dienen. Das Sperrmodul kann zum Kontrollieren einer Gas-Strömung aus dem wenigstens einen Hohlraum dienen. Das Sperrmodul kann zum Kontrollieren einer Gas-Strömung aus dem Aufnahmeraum dienen. Die Vorrichtung und/oder das Sperrmodul können/kann ein gemeinsames Entgasen des wenigstens einen Hohlraums und des Aufnahmeraums ermöglichen. Die Vorrichtung kann ein Homogenisieren des Füllstoff-Matrixmaterial-Gemischs ermöglichen. Beispielsweise kann die Vorrichtung eine Rührvorrichtung aufweisen. Die Vorrichtung kann eine Düse aufweisen. Die Düse kann dazu dienen, das Füllstoff-Matrixmaterial-Gemisch auch bei hohem Füllgrad in den wenigstens einen Hohlraum einzubringen. Die Düse kann einen Durchmesser von ca. 2mm bis ca. 5mm, insbesondere ca. 3mm, aufweisen. Die Vorrichtung kann ein Hebelsystem zum Aufbringen eines Einspritzdrucks aufweisen. Das Hebelsystem kann eine Übersetzung von ca. 12:1 bis ca. 24:1, insbesondere ca. 18:1, aufweisen. Die Vorrichtung kann eine Fördervorrichtung für das Füllstoff-Matrixmaterial-Gemisch aufweisen. Die Vorrichtung kann an einem Tisch fixierbar sein.

Das Objekt kann ein Leichtbau oder Ultraleichtbauobjekt sein. Das Objekt kann hochfest, ultrahochfest und/oder steif sein. Das Objekt kann ein Bauteil sein. Das Objekt kann voluminös sein. Das Objekt kann ein Zwischenprodukt oder ein Endprodukt sein. Das Objekt kann zur Verwendung im Maschinenbau, in der Fahrzeugtechnik, in der Luft- und Raumfahrttechnik, im Bauwesen, im Sportbereich und/oder in der Medizintechnik dienen. Das Objekt kann beispielsweise eine individuelle Prothese, ein Knotenelement, eine Anbindung, ein Pedal, ein Griff, eine Rahmenstruktur oder ein Bremshebel sein.

Die wenigstens eine Hohlraumfüllung kann mithilfe des verfestigten Füllstoff-Matrixmaterial-Gemischs gebildet sein. Die wenigstens eine Hohlraumfüllung kann den wenigstens einen Hohlraum zumindest annähernd vollständig ausfüllen. Der Füllstoff und/oder die Füllstoffelemente kann/können in dem Matrixwerkstoff eingebettet sein. Der Füllstoff und/oder die Füllstoffelemente kann/können ausgerichtet und/oder orientiert sein. Der Füllstoff und/oder die Füllstoffelemente kann/können zumindest annähernd in Erstreckungsrichtung der Längsachse des wenigstens einen Hohlraums ausgerichtet oder orientiert sein.

Das Objekt kann mehrere sich einfach, mehrfach und/oder kreuzförmig verzweigte Hohlräume mit einfach, mehrfach und/oder kreuzförmig verzweigter Hohlraumfüllung aufweisen. Das Objekt kann wenigstens einen einfach oder mehrfach räumlich gekrümmten Hohlraum mit einfach oder mehrfach räumlich gekrümmter Hohlraumfüllung saufweisen. Das Objekt kann wenigstens einen Hohlraum mit variierenden Durchmessern und/oder Querschnitten mit Hohlraumfüllung mit variierenden Durchmessern und/oder Querschnitten aufweisen.

Zusammenfassend und mit anderen Worten dargestellt ergibt sich somit durch die Erfindung unter anderem eine lastpfadgerechte Einbringung von diskontinuierlichen Fasern in komplexe Strukturen mittels einer Kombination von additiver Fertigung und Infiltrationsverfahren.

In ein 3D-gedrucktes Bauteil können Verstärkungsfasern eingebracht werden, indem zuerst ein Grundkörper additiv mittels SLA hergestellt wird, in dem Grundkörper während des Herstellungsprozesses intern Kanäle ausgespart werden und diese Kanäle des teilweise hohlen Grundkörpers anschließend mit einer faserverstärkten Kunststoffmasse aufgefüllt werden.

Die Kanäle bzw. deren Ausrichtung und Geometrie können so gewählt werden, dass diese den strukturell beanspruchten Lastpfaden im späteren Endprodukt entsprechen. Auf diese Weise können faserverstärkte Kunststoffbauteile hergestellt werden, welche strukturelle und mechanische Belastungen besser widerstehen können.

Mithilfe des erfindungsgemäßen Verfahrens kann eine Struktur hergestellt werden, welche gezielt durch Einbringung von diskontinuierlichen Fasern dreidimensional lastpfadgerecht verstärkt wird. Hierzu kann eine Basisstruktur mit Kanälen additiv hergestellt werden, wobei eine Anordnung der Kanäle z.B. einer Lösung einer Lastpfadanalyse entspricht. In einem darauffolgenden Schritt kann ein mit diskontinuierlichen Fasern angereichertes, fließfähiges Material (z.B. Epoxidharz oder erwärmter Thermoplast) durch Kombination von Unterdruck (z.B. Vakuumguss o.ä.) und Überdruck (z.B. Spritzguss o.ä.) in die Kanäle eingebracht werden. Hierbei werden die diskontinuierlichen Fasern entlang der Fließrichtung orientiert und richten sich somit entlang der Kanäle und somit Lastpfade aus. Eine lokale Ausrichtung der Fasern kann durch Variation einer Kanalgeometrie (z.B. Änderung des Durchmessers, Oberflächenstruktur oder Widerstandskörper) aktiv beeinflusst werden. Sind alle Bereiche vollständig durchströmt, kann das fließfähige Faser-Matrix-Gemisch ausgehärtet werden.

Mit der Erfindung wird eine Herstellung von lastpfadgerecht faserverstärkten Objekten bereits ab der Losgröße Eins ermöglicht. Ein Aufwand, wie Zeit- und/oder Kostenaufwand wird reduziert. Teure, individuelle Werkzeuge können entfallen. Eine Orientierung von Fasern kann durch gezielte Nutzung einer Strömung während eines Einbringens eines Füllstoff-Matrixmaterial-Gemischs erfolgen. Eine Herstellung auch hochkomplexer Objekte wird vereinfacht oder ermöglicht. Einschränkungen können reduziert werden oder entfallen.

Nachfolgend werden Ausführungsbeispiele der Erfindung unter Bezugnahme auf Figuren näher beschrieben, dabei zeigen schematisch und beispielhaft:
- Fig. 1: ein Bestimmen eines Hohlraums unter Berücksichtigung einer Lastpfadanalyse des herzustellenden Objekts,
- Fig. 2: ein additives Herstellen einer Basis,
- Fig.3: mehrfach und kreuzförmig verzweigte Hohlräume,
- Fig.4: ein Ausrichten von Fasern eines Faser-Matrixmaterial-Gemischs beim Einbringen und
- Fig.5: ein Objekt mit einer Basis und lastpfadgerechten Hohlraumfüllungen aus einem Faser-Matrix-Verbund.

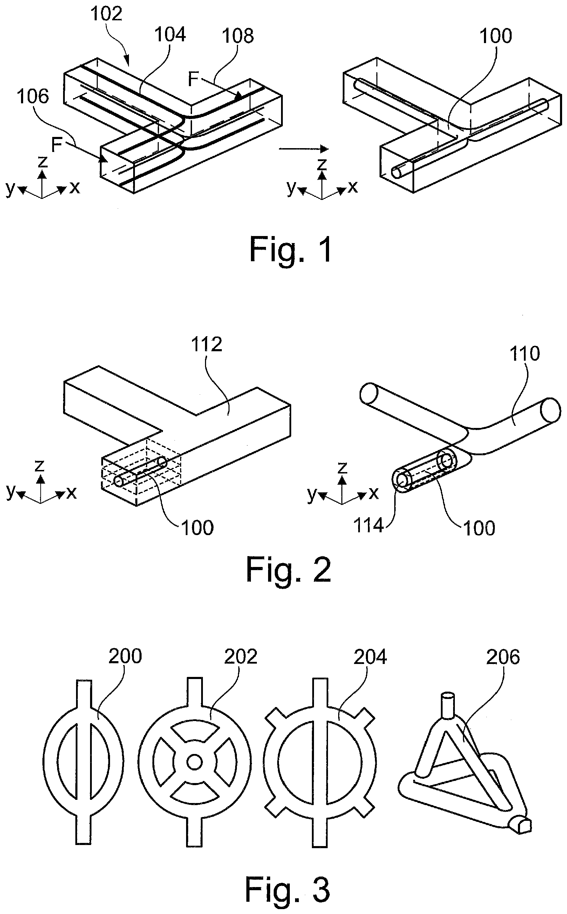

Fig.1 zeigt ein Bestimmen einer Lage und Form eines röhrenförmigen Hohlraums 100 unter Berücksichtigung einer Lastpfadanalyse 102 des herzustellenden Objekts. Das herzustellende Objekt weist eine Basis mit Hohlräumen, wie 100, und eine Hohlraumfüllung aus einem Faser-Matrix-Verbund auf.

Zunächst werden Lastpfade, wie 104, die sich unter Belastung 106, 108 ergeben, analysiert und unter Berücksichtigung der Ergebnisse wird ein optimaler Vorschlag für Lage und Form des Hohlraums 100 bestimmt.

Der Hohlraum 100 wird durch Subtraktion relevanter Lastpfade 104 in die Basis eingebracht und durch Aufdicken der relevanten Lastpfade 104 erzeugt. Beispielsweise wird eine Oberfläche der relevanten Lastpfade 104 abhängig von Materialwahl und Prozessdrücke um eine prozesstechnisch notwendige Wandstärke von ca. 2 mm aufgedickt, um Druckbelastungen ohne Deformation standzuhalten. Anschließend wird die Oberfläche beispielsweise durch Glätten von kritischen Stellen angepasst, um Unstetigkeiten Spannungskonzentrationen in der Basis zu vermeiden.

Fig. 2 zeigt ein additives Herstellen der Basis 110 aus einem 3D-Druck-Werkstoff 112. Der röhrenförmige Hohlraum 100 wird beim Herstellen der Basis 110 hergestellt und weist drei Öffnungen, wie 114, auf. Zwischen den Öffnungen 114 bildet der Hohlraum 100 einen verzweigten Kanal.

Fig. 3 zeigt mehrfach und kreuzförmig verzweigte röhrenförmige Hohlräume 200, 202, 204, 206, wie Hohlraum 100 gemäß Fig. 1 und Fig. 2.

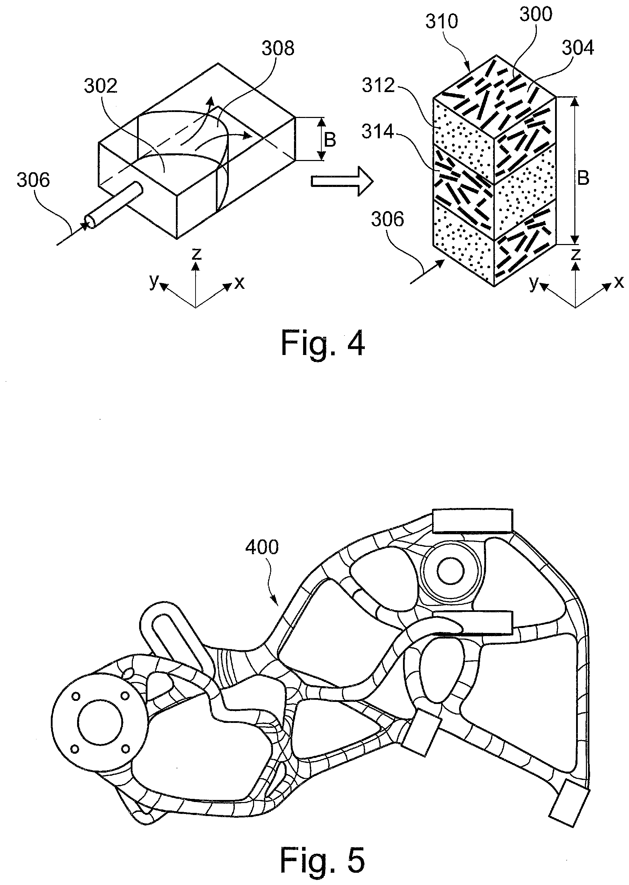

Fig. 4 zeigt ein Ausrichten von Füllstoffelementen bzw. Fasern, wie 300, eines Füllstoff-Matrixmaterial-Gemischs bzw. Faser-Matrixmaterial-Gemischs 302 beim Einbringen in einen röhrenförmigen Hohlraum, wie Hohlraum 100 gemäß Fig. 1 und Fig. 2 oder Hohlräume 200, 202, 204, 206 gemäß Fig. 2.

Zum Herstellen eines Objekts werden zunächst unspezifisch voneinander gesonderte und diskontinuierlich angeordnete Fasern 300 mit einer durchschnittlichen Länge von ca. 40µm bis ca. 300µm in einem zu verarbeitenden Matrixmaterial 304 suspendiert. Dann wird das Füllstoff-Matrixmaterial-Gemisch bzw. Faser-Matrixmaterial-Gemisch 302 in den Hohlraum eingebracht und das Matrixmaterial 304 mit den Füllstoffelementen bzw. Fasern 300 verfestigt.

Beim Einbringen des Füllstoff-Matrixmaterial-Gemischs bzw. Faser-Matrixmaterial-Gemischs 302 in einer Einspritzrichtung 306 ergibt sich eine Fließfront 308. Durch Kontrollieren eines Volumenfluss und eines Geschwindigkeitsprofils sowie durch eine Reibung zwischen dem Füllstoff-Matrixmaterial-Gemisch bzw. Faser-Matrixmaterial-Gemisch 302 und einer Oberfläche Hohlraums werden die Füllstoffelemente bzw. Fasern 300 gezielt orientiert. Beispielsweise kann ein Füllstoff-Matrix-Verbund bzw. Faser-Matrix-Verbund 310 mit Schichten, wie 312, 314 mit unterschiedlichen Füllstoffelement- bzw. Faserorientierungen hergestellt werden.

Fig. 5 zeigt ein Objekt 400 mit einer Basis und lastpfadgerechten Hohlraumfüllungen aus einem Füllstoff-Matrix-Verbund bzw. Faser-Matrix-Verbund. Zur Herstellung des Objekts 400 wird insbesondere auf Fig. 1 bis Fig. 4 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Hohlraum
- 102: Lastpfadanalyse
- 104: Lastpfad
- 106: Belastung
- 108: Belastung
- 110: Basis
- 112: 3D-Druck-Werkstoff
- 114: Öffnung

- 200: Hohlraum
- 202: Hohlraum
- 204: Hohlraum
- 206: Hohlraum
- 208: Hohlraum

- 300: Füllstoffelemente, Fasern
- 302: Füllstoff-Matrixmaterial-Gemisch, Faser-Matrixmaterial-Gemisch
- 304: Matrixmaterial
- 306: Einspritzrichtung
- 308: Fließfront
- 310: Füllstoff-Matrix-Verbund, Faser-Matrix-Verbund
- 312: Schicht
- 314: Schicht

- 400: Objekt

## Patentansprüche

1. Verfahren zum Herstellen eines Objekts (400), das Objekt (400) aufweisend eine Basis (110) mit wenigstens einem röhrenförmigen Hohlraum (100, 200, 202, 204, 206, 208) und wenigstens eine Hohlraumfüllung aus einem Verbundwerkstoff mit wenigstens einem Füllstoff und Matrixmaterial (304), wobei zeitlich aufeinanderfolgend der wenigstens eine Füllstoff in dem zu verarbeitenden Matrixmaterial (304) suspendiert, das Füllstoff-Matrixmaterial-Gemisch in den wenigstens einen Hohlraum (100, 200, 202, 204, 206, 208) eingebracht und das Matrixmaterial (304) verfestigt wird, **dadurch gekennzeichnet, dass** eine Lage und/oder eine Form des wenigstens einen Hohlraums (100, 200, 202, 204, 206, 208) unter Berücksichtigung strömungsmechanischer Aspekte bestimmt werden/wird, um Füllstoff und/oder Füllstoffelemente (300) beim Einbringen des Füllstoff-Matrixmaterial-Gemischs (302) lokal gezielt auszurichten oder zu orientieren.

2. Verfahren nach Anspruch 1, **dadurch gekennzeichnet, dass** eine Oberfläche des wenigstens einen Hohlraums (100, 200, 202, 204, 206, 208) zumindest abschnittsweise modifiziert wird.

3. Verfahren nach wenigstens einem der vorhergehenden Ansprüche, **dadurch gekennzeichnet, dass** in den wenigstens einen Hohlraum (100, 200, 202, 204, 206, 208) wenigstens ein Element zur Strömungsbeeinflussung eingebracht wird.

4. Verfahren nach wenigstens einem der vorhergehenden Ansprüche, **dadurch gekennzeichnet, dass** der wenigstens eine Füllstoff, das Matrixmaterial (304) und/oder ein Füllgrad des Füllstoff-Matrixmaterial-Gemischs unter Berücksichtigung strömungsmechanischer Aspekte ausgewählt oder bestimmt werden/wird.

5. Verfahren nach wenigstens einem der vorhergehenden Ansprüche, **dadurch gekennzeichnet, dass** das Füllstoff-Matrixmaterial-Gemisch vor dem Einbringen entgast wird.

6. Verfahren nach wenigstens einem der vorhergehenden Ansprüche, **dadurch gekennzeichnet, dass** das Füllstoff-Matrixmaterial-Gemisch unter Differenzdruckwirkung eingebracht wird.

7. Verfahren nach wenigstens einem der vorhergehenden Ansprüche, **dadurch gekennzeichnet, dass** der wenigstens eine Hohlraum (100, 200, 202, 204, 206, 208) vor dem Einbringen des Füllstoff-Matrixmaterial-Gemischs evakuiert wird.

8. Verfahren nach wenigstens einem der vorhergehenden Ansprüche, **dadurch gekennzeichnet, dass** das Füllstoff-Matrixmaterial-Gemisch während und/oder nach dem Einbringen druckbeaufschlagt wird.

9. Verfahren nach wenigstens einem der vorhergehenden Ansprüche, **dadurch gekennzeichnet, dass** als Füllstoff Fasern (300), Granulat und/oder Pulver verwendet wird.

10. Vorrichtung zum Herstellen eines Objekts (400), das Objekt (400) aufweisend eine Basis (110) mit wenigstens einem röhrenförmigen Hohlraum (100, 200, 202, 204, 206, 208) und wenigstens eine Hohlraumfüllung aus einem Verbundwerkstoff mit wenigstens einem Füllstoff und Matrixmaterial (304), **dadurch gekennzeichnet, dass** die Vorrichtung zum Durchführen eines Verfahrens nach wenigstens einem der Ansprüche 1 bis 9 geeignet ist.

11. Vorrichtung nach Anspruch 10, **dadurch gekennzeichnet, dass** die Vorrichtung einen mit dem wenigstens einen Hohlraum (100, 200, 202, 204, 206, 208) kommunizierend verbindbaren Aufnahmeraum für das Füllstoff-Matrixmaterial-Gemisch, ein Sperrmodul zum Kontrollieren einer Füllstoff-Matrixmaterial-Gemisch-Strömung von dem Aufnahmeraum in den wenigstens einen Hohlraum (100, 200, 202, 204, 206, 208) und/oder zum Kontrollieren einer Gas-Strömung aus dem wenigstens einen Hohlraum (100, 200, 202, 204, 206, 208) und/oder aus dem Aufnahmeraum aufweist.

12. Objekt (400), aufweisend eine Basis (110) mit wenigstens einem röhrenförmigen Hohlraum (100, 200, 202, 204, 206, 208) und wenigstens eine Hohlraumfüllung aus einem Verbundwerkstoff mit wenigstens einem Füllstoff und Matrixmaterial (304), **dadurch gekennzeichnet, dass** das Objekt (400) gemäß einem Verfahren nach wenigstens einem der Ansprüche 1 bis 9 hergestellt ist.

13. Objekt (400) nach Anspruch 12, **dadurch gekennzeichnet, dass** das Objekt (400) mehrere sich einfach, mehrfach und/oder kreuzförmig verzweigte Hohlräume (100, 200, 202, 204, 206, 208) mit einfach, mehrfach und/oder kreuzförmig verzweigter Hohlraumfüllung aufweist, der wenigstens eine Hohlraum (100, 200, 202, 204, 206, 208) und die wenigstens eine Hohlraumfüllung einfach oder mehrfach räumlich gekrümmt sind und/oder der wenigstens eine Hohlraum (100, 200, 202, 204, 206, 208) und die wenigstens eine Hohlraumfüllung variierende Durchmesser und/oder Querschnitte aufweisen.
